# EUROPEAN PATENT APPLICATION

(11) **EP 4 339 175 A1**
(43) Date of publication of application: **20.03.2024**
(21) Application number: 22806690.8
(22) Date of filing: 09.05.2022
(51) Int. Cl.: C04B 35/10, C04B 35/66, C04B 35/645

(54) **CORROSION-RESISTANT REFRACTORY MATERIAL, PREPARATION METHOD THEREFOR, AND USE THEREOF**

(30) Priority: 10.05.2021 CN 202110507564
(71) Applicant: Zibo City Luzhong Refractories Co., Ltd., Zibo, Shandong 255138 (CN); The University of Science and Technology Beijing, Beijing 100083 (CN); Zibo Langfeng High Temperature Materials Co., Ltd., Zibo, Shandong 255138 (CN)
(72) Inventor: CHEN, Junhong, Beijing 100083 (CN); FENG, Jisheng, Zibo, Shandong 255138 (CN); JIA, Yuanping, Zibo, Shandong 255138 (CN); LI, Bin, Beijing 100083 (CN); ZHU, Bo, Zibo, Shandong 255138 (CN); LI, Guangqi, Beijing 100083 (CN); GUO, Yutao, Zibo, Shandong 255138 (CN)
(74) Representative: Lavoix
(86) International application number: PCT/CN2022/091728
(87) International publication number: WO 2022/237727

(57) **Abstract**

Disclosed in the present invention are a corrosion-resistant refractory material, preparation method therefor, and the use thereof. In the corrosion-resistant refractory material, a material phase of the refractory material comprises corundum and one or more material phases selected from CA6, C2M2A14, CM2A8, and ZrO₂. The refractory material has low a low amount of a high-temperature liquid phase, a uniform pore structure, and good thermal shock stability; can be widely used in steel-making production lines and also in the refractory linings of rotary kilns, and has good erosion resistance and low thermal conductivity, and the performance thereof is obviously superior to that of many existing refractory materials such as silico carbide-mullite bricks and magnesia-alumina spinel bricks.

## Description

### Technical Field

The present application relates to the field of refractory material technology, in particular to a corrosion-resistant refractory material, a preparation method and application thereof.

### Background Art

Due to the presence of a large amount of oxygen in the molten iron after being blown by the converter, molten steel must undergo refining processes, mainly including deoxidation, desulfurization and removal of non-metallic inclusions. This process generally requires higher temperature and higher slag alkalinity. The damage to refractory materials during the refining process is very serious, mainly due to high temperature and high alkalinity slag.

The high temperature leads to a rapid erosion rate of refractory materials by slag. Therefore, the working lining used for refining steel ladles is generally a relatively good refractory material, with high purity and good corrosion resistance of raw materials. At present, the main raw material for applications such as corundum spinel and corundum-MgO-SiO₂ castable is corundum.

The alkalinity of refining slag is generally high and its viscosity is low, mainly focusing on desulfurization and changing the properties of inclusions. However, this also leads to deeper penetration of slag in refractory materials, and penetration implies the deterioration and corrosion of refractory materials. Due to the significant differences in expansion coefficient and high-temperature performance between the deteriorated layer and the original brick layer, the refractory material may experience peeling and damage, which is a fatal damage mode for refractory materials.

Refractory materials are different from ceramics, as they generally undergo significant temperature changes and withstand significant thermal stress in their applications. Therefore, in order to avoid stress cracking and damage of refractory materials during use, it is necessary to retain a certain porosity in refractory materials to buffer the stress caused by expansion. For example, a porosity of 15-19% is retained in the corundum spinel castable. These pores not only buffer the expansion stress, but also provide convenient conditions for the infiltration of low viscosity slag, which leads to penetration and peeling damage. For existing refractory material preparation techniques and research concepts, it is necessary to retain a certain number of pores. The fundamental reason is to avoid stress damage to refractory materials and ensure thermal shock stability performance.

Therefore, refractory materials used for steel ladles need to meet the requirements of corrosion resistance, permeability resistance and thermal shock stability. However, the thermal shock stability and permeability resistance and corrosion resistance are contradictory to each other.

The first major type of ladle working lining materials currently used in industrial application are magnesia carbon bricks and aluminum magnesia carbon bricks, which are based on magnesia sand, corundum, etc. with corrosion-resistant, and are prepared by adding graphite. Due to the low wettability of graphite, it prevents the infiltration of the slag and molten steel are prevented from permeating into the refractory material. At the same time, based on the high thermal conductivity of graphite, the temperature gradient inside the refractory material is reduced, the thermal stress caused by sudden temperature change is improved and the thermal shock stability of the refractory material is improved. However, there is a problem to adding carbon to steel in the use of graphite materials, especially in the smelting of ultra-low carbon steel. In addition, the oxidation of graphite also leads to accelerated damage of such materials, as graphite oxidation is equivalent to increasing porosity. Non carbonization of refined ladle refractory materials is a very important development direction.

Corundum spinel or corundum-MgO-SiO₂ system castables are currently carbon free refractory materials used in industrial applications. The aggregate is tabular corundum and spinel particles, and the fine powder is tabular corundum, spinel, active alumina micropower and pure aluminate cement. The raw materials for this type of castable are all high-purity and high corrosion resistance raw materials, but the refractory materials constructed together have a contradiction between thermal shock stability, permeability resistance and corrosion resistance.

For carbon free refractory materials, the improvement of thermal shock stability is usually achieved by retaining a certain porosity, but the presence of pores will lead to a decrease in permeability resistance. Corrosion resistance is achieved through high purification and high corrosion resistance of raw materials, but this also brings difficulties in sintering and how to solve the problem of permeability resistance. The permeability resistance is mainly improved by improving the sintering and density of refractory materials. To achieve density, in addition to adjusting particle size distribution, densification is achieved through the sintering process, which usually relies on the liquid phase.

Due to the fact that refractory materials are aggregates of large particles and fine powders, the densification between particles requires significant force. The surface tension and solid solution driving force of the liquid phase are very limited. Therefore, the local morphology may be changed using liquid phase sintering, but the overall structure cannot be changed and the slag penetration cannot be effectively prevented, unless there is a large amount of liquid phase present, which is not feasible for high temperature and harsh conditions such as steel refining. In addition, the presence of more liquid phases also leads to a significant decrease in the thermal shock stability of materials. Therefore, the contradiction between thermal shock stability, permeability resistance, and corrosion resistance has not been resolved.

The structural formula of calcium hexaluminate is CaO·6Al₂O₃ (abbreviated as CA6), with a melting point of 1875°C and a theoretical density of 3.79 g/cm³. The characteristics of this material are: (1) good stability under low oxygen partial pressure; (2) Calcium hexaluminate has a layered stacking structure with anisotropic crystal growth, and its growth rate in the C-axis is slow, making it difficult to sinter; (3) When CA6 reacts with slag, it generates CA2 (abbreviated as CaO·2Al₂O₃), CA (abbreviated as CaO·Al₂O₃), etc. At steelmaking temperature, when CA2 is solid and CA is liquid, the solid-liquid mixed phase blocks the pores and inhibits slag penetration.

The performance of inhibiting slag penetration is very suitable for refractory materials in contact with the melt. However, the layered structure and anisotropic growth result in poor sintering performance and difficulty in densification of the material. Therefore, it is difficult to prepare raw materials with a bulk density greater than 3.0 g/cm³ and calcium hexaluminate refractory materials with a bulk density greater than 2.9 g/cm³. Without densified CA6 raw materials, it is impossible to have high bulk density CA6 refractory materials

At present, in order to achieve the densification of calcium hexaluminate raw materials, additives such as SiO₂, TiO₂, etc. are mostly added to promote the liquid phase at high temperatures and promote its densification and sintering. For example, Chen Zhaoyou and Chai Junlan talk about the physical and chemical properties of Bonet (the trade name of calcium hexaaluminate) in "calcium hexaaluminate material and its application in aluminum industrial furnaces (Chen Zhaoyou et al., calcium hexaaluminate material and its application in aluminum industrial furnaces [J]. Refractory materials, 2011,45 (2): 122 ~ 125.)", in which the chemical composition (SiO₂) is 0.9. Another example is "A preparation method for dense calcium hexaluminate refractory clinker" (CN110171980A) and "A dense calcium hexaluminate refractory clinker and preparation method thereof" (CN105585314A), wherein TiO₂ and MnO are used as sintering agents, respectively. But this method cannot achieve densification by controlling the stacking of mirror layer atoms and only relies on the liquid phase to narrow the distance between each other's grains. However, this densification is limited. Moreover, the method of increasing density by adding sintering additives is at the cost of sacrificing the high-temperature performance of the material, which will significantly reduce the high-temperature performance of the material (although the addition amount is less than 1%, it produces several times of the liquid phase amount at high temperatures).

The refractory material based on calcium hexaluminate raw material with the addition of sintering additives not only has the defects of the raw material, but also has problems such as high apparent porosity (the highest apparent porosity of the material is 35%) and poor corrosion resistance. The damage rate of calcium hexaluminate refractory material will be very fast when the porosity is high and the addition of sintering additives is high.

Considering that CaO·2MgO·8Al₂O₃ and 2CaO·2MgO·14Al₂O₃ are both based on stacking of CA6 structural units and MgO·Al₂O₃ in the C-axis, its properties are similar to CA6. For ease of description, the following is only summarized with CA6. CaO·2MgO·8Al₂O₃ and 2CaO·2MgO·14Al₂O₃ are uniformly abbreviated as CMA. In addition, CA6 and CMA are collectively referred to as calcium hexaluminate series phases.

Therefore, based on the advantages of calcium hexaluminate in chemical composition, how to greatly improve the density and structural uniformity of the material, reduce the infiltration of molten steel and slag, reduce the deteriorated layer and damaged layer, improve the service life, and how to improve the purity, slag corrosion resistance, and service life of calcium hexaluminate materials are all very critical for refining steel ladle lining refractory materials and smelting aluminum liquid container refractory materials

Based on the above analysis, the existing technology has the following problems and defects: (1) in order to balance thermal shock stability and slag penetration resistance, refractory materials must retain a high porosity, which will lead to deeper penetration of slag into the refractory material, thicker deteriorated layer, and subsequent erosion and peeling damage; (2) to ensure corrosion resistance, most raw materials are of high purity, but it is difficult to sinter; to achieve sintering and densification of the billet, sintering additives must be introduced to reduce the melting point and increase the liquid phase, which in turn reduces the material's slag corrosion resistance; (3) sintering additives are added to promote sintering and densification, only changing the local microstructure, and the overall structure will not change much; although the material is densifed, its structural uniformity is poor; (4) there is no dense CA6 refractory raw materials produced an a large-scale; although a small amount of dense CA6 raw materials is produced, they contain sintering additives such as SiO₂;(5) the presence of a large amount of sintering additive liquid phase will lead to a significant decrease in the thermal shock stability performance of the material; (6) the contradiction between thermal shock stability and permeability resistance and corrosion resistance remains unresolved.

The difficulty in solving the above problems and defects is as follows: (1) the existing development concept of refractory materials determines that whether it is castable or refractory bricks, the distribution of pores is uneven. In order to alleviate stress damage caused by temperature changes, it is necessary to have a large amount of porosity to offset the uneven distribution of pores, which leads to inevitable and difficult to control slag penetration; (2) in order to enhance the resistance to slag erosion, only the purity of raw materials can be improved, while high-purity raw materials are difficult to achieve sintering solely through particle diffusion, and their strength cannot be guaranteed; (3) the high-purity refractory material system can only achieve sintering and strength through the addition of sintering additives in the liquid phase, but the appearance of a low melting point liquid phase leads to a decrease in corrosion resistance; (4) due to its own structural characteristics, CA6 materials are difficult to sinter; although adding sintering additives can achieve densification, their high-temperature performance is reduced, their corrosion resistance to slag is greatly reduced, and their thermal shock stability is reduced; (5) the existing development concept of refractory materials determines that it is difficult to achieve high density based on the closest packing of particles and the surface tension of the liquid phase.

Solving the above problems and defects has the following significance: based on high-purity and high corrosion resistance raw materials, refractory materials with high-purity and high corrosion-resistant can be prepared without adding any sintering additives, generating low melting point liquid phase, and relying on liquid phase sintering, which can fully exert the advantages of high-purity raw materials in corrosion resistance; building a of the refractory materials with uniform organizational structure are constructed, which not only solves the structural stress of the refractory material as a whole, but also solves the problem of slag penetration resistance, achieving the coordination and unity of permeability resistance and thermal shock stability performance; this not only fully exert the advantages of high purity raw materials with good corrosion resistance, but also takes into account the contradiction between thermal shock stability and slag penetration resistance, and also solves the problem of rapid damage to the refractory material of the ladle working lining caused by harsh refining conditions, and the economic and social economic benefits are very significant.

### Summary of the invention

In order to solve the above problems, the present application provides a high corrosion resistance refractory material, preparation method and application thereof.

The high corrosion resistance refractory material described in the present application does not require the addition of any sintering additives during the preparation process. By using the hot-pressed sintering process, refractory material products with high purity, good corrosion resistance, slag penetration resistance, and high thermal shock stability can be prepared.

The specific technical scheme of the present application is as follows:
1. A corrosion-resistant refractory material, wherein the phase of the refractory material comprises corundum and one or two or more selected from the group consisting of: CA6, C2M2A14, CM2A8 and ZrO₂.
2. The refractory material according to item 1, wherein based on the mass percentage of the phase of the refractory material, the total phase content of the corundum and one or two or more selected from CA6, C2M2A14, CM2A8 and ZrO₂ is >_ 90%;
   preferably the phase content of corundum is 26.5-89.5%, preferably 32-89.5%, more preferably 32.0-88.0%;
   the total phase content of CA6+C2M2A14+CM2A8 is 5.25-66.5%, preferably 5.25-62.0%, more preferably 6.0-62.0%; and
   the phase content of ZrO₂ is 0-35%, preferably 0-30%.
3. The refractory material according to item 1 or 2, wherein based on the mass percentage in the refractory material, the content of sintering-promoting impurity components is ≤1.5%, preferably ≤1.0%.
4. The refractory material according to any one of items 1-3, wherein the chemical composition of the refractory material comprises Al₂O₃, CaO, MgO and ZrO₂, based on the mass percentage in the refractory material, the Al₂O₃ is 59.5-98.99%, preferably 64.57-98.99%; the CaO is 0.30-5.58%, preferably 0.35-5.58%, more preferably 0.30-5.20% or 0.35-5.20%; the MgO is 0-5.58%; and the ZrO₂ is 0-35%.
5. The refractory material according to any one of items 1-4, wherein the bulk density of the refractory material is 2.90-3.65 g/cm³, preferably 2.95-3.45 g/cm³, more preferably 2.95-3.30 g/cm³.
6. The refractory material according to any one of items 1-5, wherein the refractory material is prepared by a method comprising the following steps:
   mixing a granular material and a fine powder to obtain a mixed material, then subjecting the mixed material to hot-pressed sintering to obtain the refractory material.
7. The refractory material according to item 6, wherein the mass ratio of the granular material to the fine powder is 30-65:35-70.
8. The refractory material according to item 6 or 7, wherein the granular material comprises corundum granular material and a mixed granular material, preferably based on the mass percentage in the granular material, the corundum granular material is 65-100%, and the mixed granular material is 0-35%;
   preferably the mixed granular material is one or two or more selected from the group consisting of: CA6 granular material, C2M2A14 granular material, and CM2A8 granular material;
   preferably the corundum granular material is one or two or more selected from the group consisting of: tabular corundum granular material, sintered corundum granular material, white corundum granular material, dense corundum granular material, and sub-white corundum granular material.
9. The refractory material according to any one of items 6-8, wherein the fine powder comprises Al₂O₃-CaO-MgO system fine powder and ZrO₂-containing fine powder, preferably based on the mass percentage in the fine powder, the Al₂O₃-CaO-MgO system fine powder is 50-100%, and the ZrO₂-containing fine powder is 0-50%;
   preferably the Al₂O₃-CaO-MgO system fine powder comprises Al₂O₃-containing fine powder and one or two or more fine powders selected from CA6 fine powder, C2M2A14 fine powder, CM2A8 fine powder and MgO-CaO system fine powder;
   preferably the MgO-CaO system fine powder is MgO-containing fine powder and/or CaO-containing fine powder;
   preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sintered corundum fine powder, and tabular corundum fine powder;
   preferably the MgO-containing fine powder is one or two or more selected from the group consisting of: magnesium carbonate fine powder, light-calcined magnesia fine powder, brucite fine powder, magnesium hydroxide fine powder, magnesium chloride fine powder, high-purity magnesia fine powder, and fused magnesia fine powder;
   preferably the CaO-containing fine powder is one or two or more selected from the group consisting of: quicklime fine powder, limestone fine powder, calcium hydroxide fine powder, CaO·Al₂O₃ fine powder, CaO·2Al₂O₃ fine powder, 12CaO·7Al₂O₃ fine powder, CA6 fine powder, C2M2A14 fine powder and CM2A8 fine powder;
   preferably the ZrO₂-containing fine powder is one or two or more selected from the group consisting of: monoclinic zirconia fine powder, tetragonal zirconia fine powder, desiliconized zirconium fine powder, and fused zirconia fine powder.
10. The refractory material according to any one of items 6-9, wherein the particle size of the fine powder is ≤0.088mm; preferably the particle size of the granular material is 0.088-10mm, more preferably 0.088-8mm.
11. The refractory material according to any one of items 6-10, wherein the hot-pressed sintering is performed by
   putting the mixed material into a mold of a high temperature device for hot-pressed sintering; or
   molding the mixed material at normal temperature, and then putting it into a mold of a high temperature device for hot-pressed sintering; or
   molding the mixed material at normal temperature, and presintering it at low temperature, and then putting it into a mold of a high temperature device for hot-pressed sintering.
12. The refractory material according to item 11, wherein the temperature of the hot-pressed sintering is 1550-1800°C; preferably the strength of the hot-pressed sintering is 0.5-30 MPa.
13. A preparation method for refractory material, comprising the following steps:
   mixing a granular material and a fine powder to obtain a mixed material, then subjecting the mixed material to hot-pressed sintering to obtain the refractory material.
14. The preparation method according to item 13, wherein the mass ratio of the granular material to the fine powder is 30-65:35-70.
15. The preparation method according to item 13 or 14, wherein the granular material comprises corundum granular material and a mixed granular material, preferably based on the mass percentage in the granular material, the corundum granular material is 65-100%, and the mixed granular material is 0-35%;
   preferably the mixed granular material is one or two or more selected from the group consisting of: CA6 granular material, C2M2A14 granular material, and CM2A8 granular material;
   preferably the corundum granular material is one or two or more selected from the group consisting of: tabular corundum granular material, sintered corundum granular material, white corundum granular material, dense corundum granular material, and sub-white corundum granular material.
16. The preparation method according to any one of items 13-15, wherein the fine powder comprises Al₂O₃-CaO-MgO system fine powder and ZrO₂-containing fine powder, preferably based on the mass percentage in the fine powder, the Al₂O₃-CaO-MgO system fine powder is 50-100%, and the ZrO₂-containing fine powder is 0-50%;
   preferably the Al₂O₃-CaO-MgO system fine powder comprises Al₂O₃-containing fine powder and one or more fine powders selected from CA6 fine powder, C2M2A14 fine powder, CM2A8 fine powder and MgO-CaO system fine powder;
   preferably the MgO-CaO system fine powder is MgO-containing fine powder and/or CaO-containing fine powder;
   preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sintered corundum fine powder, and tabular corundum fine powder;
   preferably the MgO-containing fine powder is one or two or more selected from the group consisting of: magnesium carbonate fine powder, light-calcined magnesia fine powder, brucite fine powder, magnesium hydroxide fine powder, magnesium chloride fine powder, high-purity magnesia fine powder, and fused magnesia fine powder;
   preferably the CaO-containing fine powder is one or two or more selected from the group consisting of: quicklime fine powder, limestone fine powder, calcium hydroxide fine powder, CaO·Al₂O₃ fine powder, CaO·2Al₂O₃ fine powder, 12CaO·7Al₂O₃ fine powder, CA6 fine powder, C2M2A14 fine powder and CM2A8 fine powder;
   preferably the ZrO₂-containing fine powder is one or two or more selected from the group consisting of: monoclinic zirconia fine powder, tetragonal zirconia fine powder, desiliconized zirconium fine powder, and fused zirconia fine powder.
17. The preparation method according to any one of items 13-16, wherein the particle size of the fine powder is ≤0.088mm; preferably the particle size of the granular material is 0.088-10mm, preferably 0.088-8mm.
18. The preparation method according to any one of items 13-17, wherein the hot-pressed sintering is performed by
   putting the mixed material into a mold of a high temperature device for hot-pressed sintering; or
   molding the mixed material at normal temperature, and then putting it into a mold of a high temperature device for hot-pressed sintering; or
   molding the mixed material at normal temperature, and presintering it at low temperature, and then putting it into a mold of a high temperature device for hot-pressed sintering.
19. The preparation method according to item 18, wherein the temperature of the hot-pressed sintering is 1550-1800°C; preferably the strength of the hot-pressed sintering is 0.5-30 MPa.
20. A working lining of a ladle for molten steel smelting, wherein it comprises the refractory material according to any one of items 1-12, or the refractory material prepared by the preparation method according to any one of items 13-19.
21. A working lining for molten aluminum smelting and transporting ladles, wherein it comprises the refractory material according to any one of items 1-12, or the refractory material prepared by the preparation method according to any one of items 13-19.
22. A refractory lining for industrial furnaces, wherein it comprises the refractory material according to any one of items 1-12, or the refractory material prepared by the preparation method according to any one of items 13-19.

### Effect of the Invention

(1) The refractory material described in the present application does not use any sintering promoting components and achieve sintering with the help of liquid phase amount during the preparation process. Instead, it utilizes high temperature and high pressure to promote particle rearrangement and particle diffusion. Therefore, the refractory material provided by the present application has good high-temperature performance, uniform organizational structure, and good thermal shock stability.
(2) In the refractory material provided by the present application, the total content of sintering promoting components such as SiO₂, TiO₂, Fe₂O₃, and R₂O (collectively known as K₂O and Na₂O) introduced from raw materials is less than or equal to 1.5%. The chemical composition purity of the material system is high, which is higher than that of refractory materials containing calcium hexaluminate phase prepared by existing technologies, which can fully utilize the performance advantages of high-purity raw materials and have outstanding resistance to slag erosion.
(3) The phase of the refractory material provided by the present application comprises corundum and one or two or more selected from CA6, C2M2A14, CM2A8, and ZrO₂. Based on the mass percentage of the phase in the refractory material, the sum of the total phases is ≥ 90%, and the phase purity is high. In addition, the CA6 phase components generate solid-liquid components containing CA2, CA, etc. when reacting with slag, blocking pores and enhancing the material's resistance to slag erosion.
(4) The bulk density of the refractory material provided by the present application is 2.90-3.65g/cm³, which is significantly higher than that of the refractory material containing calcium hexaluminate phase prepared by prior art. In addition, while maintaining the high purity of the material system, the high bulk density material of the present application greatly enhances its mechanical erosion resistance to molten steel and slag, improves its resistance to slag penetration, and greatly improves its service life.
(5) The refractory material provided by the present application has a uniform organizational structure, and there is no problem of large pore concentration or local advanced damage. The material will be evenly and slowly corroded during use, without the occurrence of spalling type of layered falling and large pieces of damage, thus greatly increasing its service life.
(6) The preparation method provided by the present application uses simple raw materials and can achieve good sintering of high-purity refractory materials containing calcium hexaluminate phase without using any sintering promoting components with the aid of a hot-pressed sintering process. The method is scientific and reasonable.
(7) The corrosion-resistant refractory material provided by the present application can be widely used in steelmaking production lines, such as the ladle working lining of the refining outside the furnace; it has good erosion resistance, greatly reducing the damage of refractory materials and the impact on molten steel during the smelting process of high-end special steel, improving the overall quality of high-end special steel in China's metallurgical industry, increasing equipment operation cycle, improving economic benefits, and achieving significant social benefits.
(8) The corrosion-resistant refractory material of the present application can also be widely used in the refractory lining of rotary kilns, such as the transition zone of cement rotary kilns; it has good erosion resistance, low thermal conductivity, and significantly better performance than many existing refractory materials such as silicon-mullite bricks and magnesium aluminum spinel bricks. It can increase equipment operation cycle, reduce heat loss, and improve economic benefits.
(9) The corrosion-resistant refractory material of the present application has low sensitivity to atmosphere and can be widely used in the masonry of industrial kilns under high temperature, reducing atmosphere, and alkaline atmosphere erosion conditions, such as petrochemical cracking furnaces. It has good stability, low thermal conductivity, good corrosion resistance, which has significantly superior performance to many existing refractory materials such as corundum bricks. It can increase equipment operation cycle, reduce heat loss, and improve economic benefits.

### Brief description of drawings

Fig. 1A is a schematic diagram of the effect of the castable obtained in Comparative Example 1 after dynamic rotating slag erosion on the castable obtained in proportion 1.
Fig. 1B is a schematic diagram of the sample effect of the refractory material described in Example 1 after dynamic rotating slag erosion.
Fig. 2A is a schematic diagram of the static crucible method for molten steel smelting in Experiment Example 2, wherein 1 is slag, 2 is a alumina crucible, 3 is steel, 4 is aluminum, and 5 is a refractory crucible.
Fig. 2B shows the effect of the erosion of the castable obtained in Comparative Example 1 and the refractory material described in Example 1 over time after molten steel smelting by the static crucible method, a. b, and c represent the contour structures of the castable obtained in Comparative Example 1 at 30 minutes, 40 minutes, and 50 minutes, respectively, while d, e, and f represent the contour structures of the refractory obtained for example 1 at 30 minutes, 40 minutes, and 50 minutes, respectively.
Fig. 2C is a schematic diagram of the microstructure comparison effect between the castable obtained in Comparative Example 1 and the refractory material described in Example 1.

### Detailed description of the invention

The following is a detailed explanation of the present application in conjunction with the embodiments described in the accompanying drawings, where the same numbers in all drawings represent the same features. Although specific embodiments of the present application are shown in the accompanying drawings, it should be understood that the present application can be implemented in various forms and should not be limited by the embodiments described here. On the contrary, these embodiments are provided for thoroughly understanding of the present application and to fully convey the scope of the present application to those skilled in the art.

It should be noted that certain terms are used in the specification and claims to refer to specific components. It should be understood by those skilled in the art that they may use different terms to refer to the same component. This specification and claims do not use differences in nouns as a way to distinguish components, but rather use differences in the function of components as a criterion for distinguishing components. The words "comprises" or "includs" mentioned throughout the entire specification and claims are open-ended terms, they should be interpreted as "including but not limited to". The subsequent description of the specification is a preferred embodiment for implementing the present application. However, the description is intended as the general principles of the specification and is not intended to limit the scope of the present application. The scope of protection of the present application shall be determined by the appended claims.

The present application provides a corrosion-resistant refractory material, wherein the phase of the refractory material comprises corundum and one or two or more selected from the group consisting of: CA6, C2M2A14, CM2A8, and ZrO2.

The phase of the refractory material is determined by XRD, for example, by grinding the measured material to below 325 mesh, and then scanning it using an X-ray diffractometer. The diffraction data are analyzed and matched with a standard PDF cards to obtain the relevant phases. Then, the content of the relevant phases is obtained by fitting the diffraction data.

Regarding the ZrO₂ phase, due to the coexistence of H_{f}O₂ and ZrO₂, it is difficult to separate and the crystal forms are similar. Therefore, the following explanation is made.
(1) H_{f}O₂ phase is included in ZrO₂.
(2) Due to different temperatures and processes, as well as uneven composition distribution (it is impossible to achieve absolute uniformity), ZrO₂-CaO solid solution, ZrO₂-MgO solid solution, CaO-ZrO₂, MgO-ZrO₂ and other phases may appear in the final product. In the case of the appearance of ZrO₂-CaO solid solution, ZrO₂-MgO solid solution, CaO-ZrO₂, MgO-ZrO₂ and other phases, the ZrO₂ content is firstly corrected by combining the XRF results. And then this ZrO₂ content is convertec into zirconia phase, converting CaO, MgO, etc. that have been solidly dissolved or bound in the form of CaO·ZrO₂, MgO·ZrO₂, etc. into CA6 and CMA (this CaO, MgO content is first converted into CA6 and MA, and then into CA6, CMA, etc. based on temperature or CaO-MgO-Al₂O₃ system composition), then normalizing all phases to 100% and calculating the percentage of each phase.

Regarding the content of ZrO₂ in the chemical composition, as it is difficult to separate H_{f}O₂ due to its symbiosis with ZrO₂. Therefore, in the XRF of this application, the H_{f}O₂ content is calculated in the ZrO₂ content.

In a preferred embodiment of the present application, wherein the total phase content of corundum and one or two or more selected from CA6, C2M2A14, CM2A8, and ZrO₂ is greater than or equal to 90% based on the mass percentage of the phase in the refractory material;
preferably, the phase content of corundum is 26.5-89.5%, preferably 32-89.5%, and more preferably 32.0-88.0%;

The total phase content of CA6+C2M2A14+CM2A8 is 5.25-66.5%, preferably 5.25-62.0%, and more preferably 6.0-62.0%; and
the phase content of ZrO₂ is 0-35%, preferably 0-30%.

For example, based on the mass percentage of the phases in the refractory material, the total phase content can be 90%, 91%, 92%, 93%, 94%, 95%, 96%, 97%, 98%, 99%, 100%, etc.

The phase content of corundum is 26.5%, 32%, 34.75%, 35%, 40%, 45%, 50%, 55%, 60%, 65%, 70%, 75%, 80%, 85%, 88%, 89.5%, etc.

The total phase content of CA6+C2M2A14+CM2A8 phases can be 5.25%, 6%, 10%, 15%, 20%, 25%, 30%, 35%, 40%, 45%, 50%, 55%, 60%, 65%, 66.5%, etc.

The phase content of ZrO₂ can be 0, 1%, 5%, 10%, 15%, 20%, 25%, 30%, 35%, etc.

Among them, the total phase content of CA6+C2M2A14+CM2A8 refers to the content of CA6 when only CA6 is present in the phase, or the content of C2M2A14 or CM2A8 phase when only C2M2A14 or CM2A8 phase is present.

When CA6 and C2M2A14 are present in the phase, it refers to the total content of the two phases. When C2M2A14 and CM2A8 are present in the phase, it refers to the total content of the two phases. When there are CA6 and CM2A8 in the phase, it refers to the total content of the two phases.

When there are CA6, C2M2A14, and CM2A8 phases in the phase, it refers to the total content of the three phases.

In a preferred embodiment of the present application, the content of sintering-promoting impurity components is ≤ 1.5%, preferably ≤ 1.0% based on the mass percentage in the refractory material.

For example, based on the mass percentage in the refractory material, the content of sintering-promoting impurity components is 1.5%, 1.4%, 13%, 1.2%, 1.1%, 1.0%, 0.9%, 0.8%, 0.7%, 0.6%, 0.5%, 0.4%, 0.3%, 0.2%, 0.1%, 0 or any range in between.

The promoting sintering impurity components are SiO₂, TiO₂, Fe₂O₃, and R₂O, wherein R₂O refers to the oxide of the alkali metal, and the promoting sintering impurity components refer to the chemical composition.

In a preferred embodiment of the present application, wherein the chemical composition of the refractory material comprises Al₂O₃, CaO, MgO, and ZrO₂, based on the mass percentage in the refractory material, the Al₂O₃ is 59.5-98.99%, preferably 64.57-98.99%; the CaO is 0.30-5.58%, preferably 0.35-5.58%, more preferably 0.30-5.20% or 0.35-5.20%; the MgO is 0-5.58% and the ZrO₂ is 0-35%.

For example, based on the mass percentage in the refractory material, the Al₂O₃ can be 59.5%, 61.45%, 65%, 70%, 75%, 80%, 85%, 90%, 95%, 98.5%, 98.99% or any range between them.

The CaO can be 0.30%, 0.5%, 1%, 1.5%, 2%, 2.5%, 3%, 3.5%, 4.5%, 5%, 5.58% or any range between them.

The MgO can be 0, 0.5%, 1%, 1.5%, 2%, 2.5%, 3%, 3.5%, 4%, 4.5%, 5%, 5.58% or any range between them.

The ZrO₂ can be 0, 5%, 10%, 15%, 20%, 25%, 30%, 35%, or any range in between.

The chemical composition of the refractory material is determined by fluorescence analysis, that is XRF in accordance with GB/T21114-2007.

In a preferred embodiment of the present application, the bulk density of the refractory material is 2.90-3.65 g/cm³, preferably 2.95-3.45 g/cm³, and more preferably 2.95-3.30 g/cm³.

For example, the bulk density of the refractory material can be 2.90 g/cm³, 2.91 g/cm³, 2.92 g/cm³, 2.93 g/cm³, 2.94 g/cm³, 2.95 g/cm³, 2.96g /cm³, 2.97 g/cm³, 2.98 g/cm³, 2.99 g/cm³, 3.00 g/cm³, 3.05 g/cm³, 3.10 g/cm³, 3.15 g/cm³, 3.20 g/cm³, 3.25 g/cm³, 3.30 g/cm³, 3.35 g/cm³, 3.40 g/cm³, 3.45 g/cm³, 3.50 g/cm³, 3.55 g/cm³, 3.60 g/cm³, 3.65 g/cm³ or any range between them.

The bulk density of the refractory material is measured in accordance with GB/T2997-2000.

In a preferred embodiment of the present application, the refractory material is prepared by a method comprising the following steps:
mixing a granular material and a fine powder to obtain a mixed material, then, then subjecting the mixed material to hot-pressed sintering to obtain the refractory material.

The granular material refers to the part that cannot be sieved through a 180-mesh square hole sieve (Xinxiang Zhongtuo Machinery Equipment Co., Ltd.), that is, the part located on the 180-mesh square hole sieve. The particle size of the granular material is 0.088-10mm, which is 0.088-10 mm, preferably 0.088-8 mm. For example, the particle size of the granular material can be 0.088 mm, 0.090 mm, 0.095 mm, 0.10 mm, 0.15 mm, 0.20 mm, 0.25 mm, 0.30 mm, 0.35 mm, 0.40 mm, 0.4 5mm, 0.50 mm, 0.55 mm 0.60 mm, 0.65 mm, 0.70 mm, 0.75 mm, 0.80 mm, 0.85 mm, 0.90 mm, 0.95 mm, 1 mm, 2 mm, 3 mm, 4 mm, 5 mm, 6 mm, 7 mm, 8 mm, 9 mm, 10 mm or any range between them.

The fine powder refers to the part that passes through the 180-mesh square hole sieve, that is, the part located at the bottom of the 180-mesh square hole sieve, with a particle size ≤ 180 mesh, that is, a particle size ≤ 0.088mm.

The hot-pressed sintering refers to a method of achieving sintering and preparation of materials under the combined action of applied pressure and temperature.

In a preferred embodiment of the present application, the mass ratio of the granular material to the fine powder is 30-65:35-70.

For example, the mass ratio of the granular material to the fine powder (mass ratio of the granular material to the fine powder) is 30/70, 31/69, 32/68, 33/67, 34/66, 35/65, 36/64, 37/63, 38/62, 39/61, 40/60, 41/59, 42/58, 43/57, 44/56, 45/55, 46/54, 47/53, 48/52, 49/51.50, 51/49, 52/48, 53/47, 54/46, 55/45, 56/44, 57/43, 58/42, 59/41, 60/40, 61/39, 62/38, 63/37, 64/36, 65/35 or any range between them.

In a preferred embodiment of the present application, the granular material compirses corundum granular material and a mixed granular material, preferably, based on the mass percentage in the granular material, the corundum granular material is 65-100%, and the mixed granular material is 0-35%;
preferably, the mixed granular material is selected from one or two or more selected from the group consisting of: CA6 granular material, C2M2A14 granular material, and CM2A8 granular material;
preferably, the corundum granular material is one or two or more selected from the group consisting of: tabular corundum granular material, sintered corundum granular material, white corundum granular material, dense corundum granular material, and sub-white corundum granular material.

Based on the mass percentage in the granular material, the corundum granular material can be 65%, 70%, 75%, 80%, 85%, 90%, 95%, 100% or any range between them; and
the mixed granular material can be 0, 5%, 10%, 15%, 20%, 25%, 30%, 35% or any range between them.

The C2M2A14 granular material refers to 2CaO·2MgO·14Al₂O₃ granular material, while the CM2A8 granular material refers to CaO·2MgO·8Al₂O₃ granular material.

The tabular corundum granular material has a coarsely crystallized and well-developed a-Al₂O₃ crystal structure. The content of Al₂O₃ is above 97.0% with a tabular crystal structure. The tabular corundum granular material has small pores and more closed pores.

The sintered corundum granular material refers to a refractory clinker made from industrial alumina as raw material, finely ground into pellets or billets, and sintered at 1750-1900°C. It has a high bulk density, low porosity, and excellent resistance to thermal shock and slag erosion at high temperatures.

The white corundum granular material is an alumina raw material with an aluminum oxide (Al₂O₃) content of over 97.5%, which is prepared by electric melting using industrial alumina as the raw material. It contains a small amount of iron oxide, silicon oxide, and other components, and is white.

The sub white corundum granular material is produced using bauxite as raw material, and is called sub white corundum due to its chemical composition and physical properties being close to those of white corundum. This product has the hardness of white corundum and the toughness of brown corundum, making it an ideal advanced refractory material and grinding material.

In a preferred embodiment of the present application, the fine powder comprises Al₂O₃-CaO-MgO system fine powder and ZrO₂-containing fine powder, preferably based on the mass percentage in the fine powder, the Al₂O₃-CaO-MgO system fine powder is 50-100%, and the ZrO₂-containing fine powder is 0-50%;
preferably, the Al₂O₃-CaO-MgO system fine powder comprises Al₂O₃-containing fine powder and one or two or more fine powders selected from CA6, C2M2A14, CM2A8, and MgO-CaO system fine powders;
preferably, the MgO-CaO system fine powder is MgO-containing fine powder and/or CaO-containing fine powder;
preferably, the Al₂O₃-containing fine powder is one or two or more selected from the group consisting of: the active α-Al₂O₃ powder, γ-Al₂O₃ powder, ρ-Al₂O₃ powder, aluminum hydroxide, industrial alumina, white corundum powder, sintered corundum powder, and tabular corundum powder;
preferably, the MgO-containing fine powder is one or two or more selected from the group consisting of: magnesium carbonate, light-calcined magnesia, brucite, magnesium hydroxide, magnesium chloride, high-purity magnesia and fused magnesia;
preferably, the CaO-containing fine powder is one or two or more selected from the group consisting of: quicklime, limestone, calcium hydroxide, CaO·Al₂O₃, CaO·Al₂O₃ (CA2), 12CaO·7Al₂O₃ (C12A7), CA6, C2M2A14, and CM2A8;
preferably, the ZrO₂-containing fine powder is one or two or more selected from the group consisting of: monoclinic zirconia, tetragonal zirconia, desiliconized zirconium, and fused zirconia.

Considering that the phase of Al₂O₃-CaO-MgO fine powder after high-temperature hot-pressed sintering comprises corundum phase and one or two or more of CA6, CM2A8, and C2M2A14.Therefore, the phase of corundum can be transformed from Al₂O₃-containing fine powder at high temperature. CA6 can be obtained by reacting CA6 fine powder in CaO-containing raw materials and/or Al₂O₃-containing fine powder with CaO-containing raw materials such as quicklime, limestone, calcium hydroxide, CaO·Al₂O₃, CaO·2Al₂O₃, and 12CaO·7Al₂O₃. C2M2A14 can be obtained by reacting C2M2A14 fine powder and/or Al₂O₃-containing fine powder, MgO-containing fine powder, and CaO-containing fine powder (except C2M2A14). CM2A8 can be obtained by reacting CM2A8 fine powder and/or Al₂O₃-containing fine powder, MgO-containing fine powder, and CaO-containing fine powder (except for CM2A8).

Based on the mass percentage in the fine powder, the Al₂O₃-CaO-MgO system fine powder can be, for example, 50%, 55%, 60%, 65%, 70%, 75%, 80%, 85%, 90%, 95%, 100% or any range between them; and
the ZrO₂-containing fine powder can be 0, 5%, 10%, 15%, 20%, 25%, 30%, 35%, 40%, 45%, 50% or any range between them.

The Al₂O₃-containing fine powder refers to a fine powder with the main chemical composition of Al₂O₃ or Al (OH)₃.

The MgO-containing fine powder refers to a fine powder with a main chemical composition of MgO or Mg (OH)₃.

The CaO-containing fine powder refers to a fine powder whose chemical composition comprises CaO components, or a fine powder containing CaO and Al₂O₃, or a fine powder containing CaO, MgO, and Al₂O₃.

The ZrO₂-containing fine powder refers to the fine powder whose chemical composition is mainly ZrO₂.

The active α-Al₂O₃ powder is an alumina powder with high activity(which is mainlyα-Al₂O₃), obtained by processing industrial alumina or aluminum hydroxide as a raw material at 1250-1450°C.

The γ-Al₂O₃ powder is an alumina powder with a higher specific surface area and better adsorption properties, obtained by treating aluminum hydroxide as a raw material.

The ρ-Al₂O₃ powder is an aluminum oxide powder with a certain hydration binding properties obtained by rapid high-temperature treatment at 600-900°C using aluminum hydroxide as the raw material.

The main component of industrial alumina is a mineral whose main component is α-Al₂O₃, which is prepared from aluminum hydroxide as raw material and calcined at 900-1250°C.

The white corundum powder is an aluminum oxide raw material prepared from industrial aluminum oxide as a raw material by electric melting, with a content of over 97.5% in Al₂O₃. It also comprises a small amount of iron oxide, silicon oxide, and other components, and is white in color.

The sintered corundum powder refers to a refractory clinker made from alumina as raw material, finely ground into pellets or billets, and sintered at 1750-1900°C. It has a high bulk density, low porosity, and excellent thermal shock resistance and slag erosion resistance at high temperatures.

The tabular corundum powder has a coarsely crystallized and well-developed a-Al₂O₃ crystal structure, with an Al₂O₃ content of over 97.0%. It has a tabular crystal structure with small pores and many closed pores.

The light-calcined magnesia is a magnesia raw material with high activity and magnesite phase, which is prepared by calcining magnesite (whose mainl component is magnesium carbonate) at 800-1000°C.

The brucite is a raw material with Mg (OH)₂ as the main component.

The sintered magnesia is a dense magnesia raw material with a MgO content of ≥ 94.5%, which is made from light-calcined magnesia and calcined at high temperature.

The fused magnesia is a dense magnesia material with MgO content ≥ 96.5%, which is prepared from light-calcined magnesia or magnesite by arc melting.

The quicklime, also known as calcined lime, is mainly composed of calcium oxide. It is usually prepared by calcining natural rocks, which are mainly composed of calcium carbonate, at high temperatures to decompose and generate carbon dioxide and calcium oxide (chemical formula: CaO, also known as quicklime, or marble).

The monoclinic zirconia is a stable zirconia product at room temperature, and its crystal form is monoclinic.

The tetragonal zirconia is a stable zirconia in the form of a tetragonal phase.

The desilication zirconium is a zirconia prepared by removing SiO₂ and other impurities from zircon sand.

The fused zirconia is a zirconia prepared by arc melting of zirconia powder

In a preferred embodiment of the present application, the hot-pressed sintering is performed by:
putting the mixed into a mold of a high-temperature device for hot-pressed sintering, or molding the mixed material at normal temperature, and then putting it in a mold of a high-temperature device for hot-pressed sintering, or molding the mixed material at normal temperature, and pre-sintering it at a low-temperature, and then putting it into a mold of a high-temperature device for hot-pressed sintering.

For example, putting the mixed material into a mold of a high-temperature device for hot-pressed sintering means that the mixed material is put into the mold of the high-temperature device for heating up, and applying pressure when the temperature reaches the maximum temperature to achieve sintering, or continuously holding the temperature and pressure for a certain period of time to complete the hot-pressed sintering of the material, or putting the mixed material into a mold of a high-temperature device, applying the pressure when the temperature is raised to a certain temperature, then gradually increasing the temperature and simultaneously increasing the applied pressure until the temperature reaches the maximum temperature and the pressure reaches the maximum value, completing the hot-pressed sintering of the material, or continuously holding the temperature and pressure for a certain period of time to complete the hot-pressed sintering of the material; or putting the mixed material into a mold of a high-temperature device, gradually increasing the pressure applied to the mixed material while increasing the temperature until the temperature reaches the maximum temperature and the pressure reaches the maximum value, to complete the hot-pressed sintering of the material; or continuously holding the temperature and pressure for a certain period of time to complete the hot-pressed sintering of the material.

Molding the mixed at normal temperature and then putting it into a mold of a high-temperature device for hot-pressed sintering means that the mixed material is pressed into a billet at normal temperature, drying it, and then putting it in the mold of the high temperature device for hot-pressed sintering; or applying the pressure when the billet is heated to the maximum temperature to achieve sintering, or continuously holding the temperature and pressure for a certain period of time to complete hot-pressed sintering of the material; or putting the billet into a mold of a high-temperature device, applying the pressure when the temperature was raised to a certain temperature, then gradually increasing the temperature and simultaneously increasing the applied pressure until the temperature reaches the maximum temperature and the pressure reaches the maximum value to complete hot-pressed sintering of the material, or continuously holding the temperature and pressure for a certain period of time to complete the hot-pressed sintering of the material; or putting the billet into a mold of a high-temperature device and gradually increasing the pressure applied to the mixture while increasing the temperature until the temperature reaches the maximum temperature and the pressure reaches the maximum value to complete the hot-pressed sintering of the material, or continuously holding the the insulation and pressure for a certain period of time to complete the hot-pressed sintering of the material.

The high-temperature device is a high-temperature device commonly used by those skilled in the art, such as a high-temperature furnace.

Molding the mixed material at normal temperature, and presintering it at low temperature, and then putting it into a mold of a high-temperature device for hot-pressed sintering means that the mixed material is pressed at normal temperature, and pre-sintered at 1350 to 1500°C before hot-pressed sintering. The hot-pressed sintering operation is the same as above.

In a preferred embodiment of the present application, the temperature of hot-pressed sintering is 1550-1800°C, preferably the strength of the hot-pressed sintering is 0.5-30MPa.

The strength of the hot-pressed sintering refers to the pressure value applied to a unit area of the sample.

For example, the temperature of hot-pressed sintering can be 1550°C, 1600°C, 1650°C, 1700°C, 1750°C, 1800°C or any range between them.

For example, the strength of the hot-pressed sintering can be 0.5 MPa, 1 MPa, 1.5 MPa, 2 MPa, 2.5 MPa, 3 MPa, 3.5 MPa, 4 MPa, 4.5 MPa, 5 MPa, 5.5 MPa, 6 MPa, 6.5 MPa, 7 MPa, 7.5 MPa, 8 MPa, 8.5 MPa, 9 MPa, 9.5 MPa, 10 MPa, 10.5 MPa, 11 MPa, 11.5 MPa, 12 MPa, 12.5 MPa, 13 MPa, 13.5 MPa, 14 MPa, 14.5 MPa, 15 MPa, 20 MPa, 25 MPa, 30 MPa or any range between them.

The present application provides a preparation method for refractory materials, comprising the following steps:
mixing a granular material and afine powder to obtain a mixed material, and the subjecting the mixed material to hot-pressed sintering to obtain the refractory material.

In a preferred embodiment of the present application, the mass ratio of the granular material to the fine powder is 30-65:35-70.

In a preferred embodiment of the present application, the particle size of the fine powder is ≤ 0.088mm; preferably, the particle size of the granular material is 0.088-10mm, preferably 0.088-8mm.

In a preferred embodiment of the present application, the hot-pressed sintering is performed by
putting the mixed material into a mold of a high temperature device for hot-pressed sintering; or
molding the mixed material at normal temperature, and then putting it into a mold of a high temperature device for hot-pressed sintering; or
molding the mixed material at normal temperature, and presintering it at low temperature, and then putting it into a mold of a high temperature device for hot-pressed sintering.

The refractory material obtained by utilizing high temperature and high pressure to promote particle rearrangement and particle diffusion has low high-temperature liquid content, uniform organizational structure, and good thermal shock stability performance.

The present application provides a working lining of a ladle for molten steel smelting, which comprises the refractory material mentioned above or the refractory material prepared by the preparation method mentioned above.

The present application provides a working lining for molten aluminum smelting and transporting ladles, which comprises the refractory material or the refractory material prepared by the preparation method mentioned above.

The present application provides a refractory lining for an industrial furnaces, which comprises the refractory material or the refractory material prepared by the preparation method mentioned above.

### Embodiment

The present application provides a general and/or specific description of the materials and test methods used in the experiment. In the following examples, unless otherwise specified, % represents wt%, which is the mass percentage. The reagents or instruments used, if the manufacturer is not specified, are all conventional reagent products that can be obtained through market. Among them, Table 1 shows the sources of the raw materials used in the examples.

**Table 1 Sources of raw materials used in the example**

| Raw material | Purity | Producer |
|---|---|---|
| Tabular corundum powder | Al₂O₃≥97.0% | Qingdao Anmai Aluminum Industry Co., Ltd |
| CA6 fine powder | Al₂O₃ 90.5-92.5% | Zibo Luzhong Refractory Materials Co., Ltd |
| | CaO 7.4-9.0% | |
| Sintered corundum granular material | Al₂O₃≥97.0% | Jiangsu Jinghui Refractory Materials Co., Ltd |
| CA6 granular material | Al₂O₃ 90.5-92.5% | Zibo Luzhong Refractory Materials Co., Ltd |
| | CaO 7.4-9.0% | |
| Light-calcined magnesium oxide | MgO≥92.5% | |
| CaO·Al₂O₃ | Al₂O₃≥64% | Shandong Shengchuan New Materials Co., Ltd |
| | CaO₂≥35%% | |
| γ-Al₂O₃ powder | Al₂O₃≥96.0% | Shandong Aluminum Corporation |
| White corundum granular material | Al₂O₃≥97.5% | Zhengzhou Yufa Group |
| ρ- Al₂O₃ fine powder | Al₂O₃≥93.5% | Shandong Aluminum Corporation |
| 12CaO·7 Al₂O₃ fine powder | Al₂O₃≥51% | Shandong Shengchuan New Materials Co., Ltd |
| | CaO ^48%% | |
| Industrial alumina fine powder | Al₂O₃≥96.0% | Shandong Aluminum Corporation |
| Desilication zirconium fine powder | ZrO₂+H₂O≥91% | Shandong Golden Sun Zirconium Industry Co., Ltd |
| Sub white corundum granular material | Al₂O₃≥96.5% | Luoyang Ruishi Company |
| CM2A8 granular material | Al₂O₃≥84% | Zibo Luzhong Refractory Materials Co., Ltd |
| | CaO≥5.0% | |
| | MgO≥8.0% | |
| Active α- Al₂O₃ fine powder | Al₂O₃≥97.0% | Qingdao Anmai Aluminum Industry Co., Ltd |
| Fused zirconia fine powder | ZrO₂+H₂O≥98.5% | Shandong Golden Sun Zirconium Industry Co., Ltd |
| C2M2A14 granular material | Al₂O₃≥87% | Zibo Luzhong Refractory Materials Co., Ltd |
| | CaO≥6.2% | |
| | MgO≥4.3% | |
| Tabular corundum granular material | Al₂O₃≥97.0% | Qingdao Anmai Aluminum Industry Co., Ltd |
| White corundum fine powder | Al₂O₃≥97.5% | Zhengzhou Yufa Group |
| High purity magnesia powder | MgO≥96.5% | Yingkou Jiamagnesium Refractory Materials Co., Ltd |
| quick lime | CaO≥91.5% | |
| Monoclinic zirconia fine powder | ZrO₂+H₂O≥98.5% | Shandong Golden Sun Haoye Co., Ltd |
| Sub white corundum powder | Al₂O₃≥96.5% | Luoyang Ruishi Co., Ltd |

### Example 1

(1) 600 g of white corundum granular material, 40 g of active α-Al₂O₃ fine powder, 100 g of industrial alumina fine powder, 60 g of CM2A8 fine powder, and 200 g of fused zirconia fine powder were stirred evenly to obtain a mixed material, and the maximum particle size of the granular material is 5 mm;
(2) the mixed material was put in a mold of a high-temperature device for hot-pressed sintering, and applying pressure when the temperature was raised to a maximum temperature of 1640°C. When the maximum hot-pressed strength was 6MPa, a corrosion-resistant refractory material was prepared.

The obtained refractory material was analyzed by powder XRD analysis, i.e. the obtained refractory material was ground to below 325 mesh, and then scanned by using an X-ray diffractometer (Bruker: D8 ADVANCE). The diffraction data were analyzed and matched with standard PDF cards to obtain the relevant phases. Then, the content of the relevant phases was obtained by fitting the diffraction data, and the main obtained phases are mainly corundum, CM2A8, and zirconia. Based on the mass percentage of the phase of the refractory material, the total content of corundum CM2A8 and zirconia was 99.1%, the corundum phase was 73.1%, the CM2A8 phase is 6.0%, and the zirconia phase was 20.0%.

The refractory material was analyzed by XRF according to standards, and measured according to GB/T21114-2007. Based on the mass percentage in the refractory material, the refractory material comprised 78.17% Al₂O₃, 0.43% MgO, 0.35% CaO, and 20.0% ZrO₂.

The refractory material in this embodiment was measured according to GB/T2997-2000, and the bulk density was 3.30 g/cm³.

### Example 2

(1) 300g of dense corundum granular material, 200 g of tabular corundum particles, 140 g of CA6 fine powder, 92 g of industrial alumina fine powder, 15 g of CaCO₃ fine powder, 160 g of white corundum powder, and 100 g of desiliconized zirconia fine powder were stirred evenly to obtain a mixed material, and the maximum particle size of the granular material is 5 mm;
(2) the mixed material was put in a mold of a high-temperature device for hot-pressed sintering. When the temperature was raised to 1500°C, the pressure was applied. The temperature was increased while increasing the pressure. When the maximum temperature was raised to 1760°C, and the maximum hot-pressed strength was 2 MPa, a corrosion-resistant refractory material was prepared.

The analysis was carried out according to the same method as in Example 1, and the phases obtained were mainly corundum, CA6, and zirconia. Based on the mass percentage of the phase of the refractory material, the total content of corundum, CA6, and zirconia was 98.18%, the corundum phase was 65.1%, the CA6 phase was23.4% , and the zirconia phase are was 9.68%.

The analysis was carried out according to the same method as in Example 1, and the refractory material comprised 87.12% Al₂O₃, 1.93% CaO, and 9.65% ZrO₂ based on the mass percentage of the refractory material.

The analysis was carried out according to the same method as in Example 1, and the bulk density obtained was 3.12 g/cm³.

### Example 3

(1) 260g of sub white corundum granular material, 140 g of CM2A8 granular material, 60 g of white corundum powder, 100 g of CM2A8 powder, 17 g of C12A7 fine powder, 17.5 g of magnesium hydroxide powder, and 113 g of active α-Al₂O₃ powder and 300 g of fused zirconia powder were stirred evenly to obtain a mixed material. The maximum particle size of the granular material is 8mm;
(2) the mixed material was pressed, molding and drying, and then putting into a mold of a high-temperature device for hot-pressed sintering. When the maximum temperature was raised to 1780°C and the maximum hot-pressed strength was 0.5MPa, a corrosion-resistant refractory material was prepared.

The analysis was carried out according to the same method as in Example 1, and the phases obtained were mainly corundum, CM2A8, and zirconia. Based on the mass percentage of the phase of the refractory material, the total content of corundum, CM2A8, and zirconia was 98.5%, the corundum phase was 32.0%, the CM2A8 phase was 36.5%, and the zirconia phase was 30%.

The analysis was carried out according to the same method as in Example 1, the refractory material comprised 64.57% Al₂O₃, 2.94% MgO, 2.01% Ca0, and 30% ZrO₂ based on the mass percentage of the refractory material.

The analysis was carried out according to the same method as in Example 1, and the bulk density obtained was 3.30 g/cm³.

### Example 4

(1) 300g of sintered corundum granular material, 300 g dense of corundum granular material, 280g of white corundum fine powder, 110g of active α-Al₂O₃ powder, and 13.5 g of calcium hydroxide fine powder were stirred evenly to obtain a mixed material, and the maximum particle size of the granular material is 5 mm;
(2) the mixed material was put into a mold of a high-temperature device for hot-pressed sintering. The pressure was gradually applied when the temperature was raised to 1400°C. when the maximum temperature was raised to 1680°C and the maximum hot-pressed strength was 1 MPa, a corrosion-resistant refractory material was prepared.

The analysis was carried out according to the same method as in Example 1, and the phases obtained were mainly corundum and CA6. Based on the mass percentage of the phase of the refractory material, the total content of corundum and CA6 was 98.6%, the corundum phase was 88.0% and the CA6 phase was 10.6%.

The analysis was carried out according to the same method as in Example 1, and the refractory material comprised 98.99% Al₂O₃ and 0.89% CaO based on the mass percentage of the refractory material.

The analysis was carried out according to the same method as in Example 1, and the bulk density obtained was 2.95 g/cm³.

### Example 5

(1) 500 g of sub white corundum granular material, 73 g of CA6 fine powder, 100 g of white corundum powder, 28 g of ρ-Al₂O₃ powder, and 40 g of CaO·Al₂O₃ fine powder were stirred evenly to obtain a mixed material, and the maximum particle size of the granular material is 5 mm;
(2) appropriate water was added into the mixed material, stirring evenly, casting, drying, pre-sintering at 1500°C and putting into a mold of a high-temperature device for hot-pressed sintering. When the temperature was raised to 1770°C, the pressure was applied. When the maximum hot-pressed strength was 2 MPa, a corrosion-resistant refractory material was prepared.

The analysis was carried out according to the same method as in Example 1, and the phases obtained were mainly corundum and CA6. Based on the mass percentage of the phase of the refractory material, the total content of corundum and CA6 was 96.9%, the corundum phase was 74.5% and the CA6 phase was 22.4%.

The analysis was carried out according to the same method as in Example 1, and the refractory material comprised 96.6% Al₂O₃ and 1.95% CaO based on the mass percentage of the refractory material.

The analysis was carried out according to the same method as in Example 1, and the bulk density obtained was 3.12 g/cm³.

### Example 6

(1) 650 g of tabular corundum granular material, 105 g of CA6 fine powder, 100 g of white corundum powder, and 223 g of aluminum hydroxide powder were stirred evenly to obtain a mixed material, and the maximum particle size of granular material is 5 mm;
(2) the mixed material was put into a mold of a high-temperature device for hot-pressed sintering, and the pressure was applied while increasing the temperature. When the maximum temperature was raised to 1700°C and the maximum hot-pressed strength was 14 MPa, a corrosion-resistant refractory material was prepared.

The analysis was carried out according to the same method as in Example 1, and the phases obtained were mainly corundum and CA6. Based on the mass percentage of the phase of the refractory material, the total content of corundum and CA6 was 98.1%, the corundum phase was 88.0% and the CA6 phase was 10.1%.

The analysis was carried out according to the same method as in Example 1, and based on the mass percentage in the refractory material, the obtained refractory material comprised 98.99% Al₂O₃ and 0.75% CaO.

The analysis was carried out according to the same method as in Example 1, and the bulk density was 3.28 g/cm³.

### Example 7

(1) 500g of sub white corundum granular material, 100 g of C2M2A14 fine powder, 45 g of CA2 fine powder, 7 g of fused magnesia powder, 89 g of ρ-Al₂O₃ powder, and 260 g of white corundum powder were stirred evenly to obtain a mixed material, and the maximum particle size of the granular material was 5 mm;
(2) appropriate water was added into the mixed material, stirring evenly, casting, drying, pre-sintering at 1350°C, and putting into a mold of a high-temperature device for hot-pressed sintering. When the temperature was raised to 1750°C, the pressure was applied. When the maximum hot-pressed strength was 1 MPa, a corrosion-resistant refractory material was prepared.

The analysis was carried out according to the same method as in Example 1, and the phases obtained were mainly corundum and C2M2A14. Based on the mass percentage of the phase of the refractory material, the total content of corundum and C2M2A14 was 96.2%, the corundum phase was 75.0% and the C2M2A14 phase was 21.2%.

The analysis was carried out according to the same method as in Example 1, and based on the mass percentage in the refractory material, the obtained refractory material comprised 96.3% Al₂O₃, 1.0% MgO, and 1.20% CaO.

The analysis was carried out according to the same method as in Example 1, and the bulk density obtained was 3.12 g/cm³.

### Example 8

(1) 300 g of sub white corundum granular material, 90 g of CA6 fine powder, 17 g of calcium hydroxide fine powder, 138 g of active α-Al₂O₃ powder, 265 g of ρ-Al₂O₃ powder, and 460 g of white corundum powder were stirred evenly to obtain a mixed material. The maximum particle size of the granular material is 5 mm;
(2) the mixed material was pressed, molding, drying, treating at 1450°C in a high-temperature device. The treated sample was put into a mold of a high-temperature device for hot-pressed sintering, and when the temperature rose to 1600°C, the pressure was applied. The pressure was increased while the temperature was increased. When the maximum temperature was raised to 1770°C and the maximum hot-pressed strength was 3 MPa, a corrosion-resistant refractory material was prepared.

The analysis was carried out according to the same method as in Example 1, and the phases obtained were mainly corundum and CA6. Based on the mass percentage of the phase of the refractory material, the total content of corundum and CA6 was 97.1%, the corundum phase was 74.7% and the CA6 phase was 22.4%.

The analysis was carried out according to the same method as in Example 1, and based on the mass percentage in the refractory material, the obtained refractory material comprised 96.4% Al₂O₃ and 1.91% CaO.

The analysis was carried out according to the same method as in Example 1, and the bulk density obtained was 3.12 g/cm³.

### Example 9

(1) 500 g of tabular corundum granular material, 100 g of CM2A8 fine powder, 11 g of calcium hydroxide fine powder, 17.5 g of high-purity magnesia powder, 122 g of industrial alumina fine powder, and 260 g of tabular corundum powder were stirred evenly to obtain a mixed material, and the maximum particle size of the granular material is 5 mm;
(2) the mixed material was molded at normal temperature and dried, and then put into a mold of a high-temperature device for hot-pressed sintering. The pressure was applied when the temperature was raised to 1550°C, and the pressure was increased while increasing temperature. When the maximum temperature was raised to 1740°C, and the maximum hot-pressed strength was 4 MPa, a corrosion-resistant refractory material was prepared.

The analysis was carried out according to the same method as in Example 1, and the phases obtained were mainly corundum and CM2A8. Based on the mass percentage of the phase of the refractory material, the total content of corundum and CM2A8 was 95.42%, the corundum phase was 73.1% and the phase was CM2A8.

The analysis was carried out according to the same method as in Example 1, and based on the mass percentage in the refractory material, the obtained refractory material comprised 95.7% Al₂O₃, 1.97% MgO, and 1.02% CaO.

The analysis was carried out according to the same method as in Example 1, and the bulk density obtained was 3.12 g/cm³.

### Example 10

(1) 260 g of sintered corundum granular material, 140 g of CA6 granular material, 120 g of sub white corundum fine powder, 55 g of Ca (OH)₂ fine powder, 200 g of tabular corundum powder, and 245 g of ρ-Al₂O₃ fine powder were stirred evenly to obtain a mixed material, and the maximum particle size of the granular material is 6 mm;
(2) the mixed material was pressed to mold at normal temperature, pre-sintering at 1500°C, and then putting into a mold of a high-temperature device. The pressure was applied while the temperature was raised. The maximum temperature was raised to 1750°Cand the maximum hot-pressed strength was 7 MPa, a corrosion-resistant refractory material was prepared.

The analysis was carried out according to the same method as in Example 1, and the phases obtained were mainly corundum and CA6. Based on the mass percentage of the phase of the refractory material, the total content of corundum and CA6 was 98.8%, the corundum phase was 36.8% and the CA6 phase was 62.0%.

The analysis was carried out according to the same method as in Example 1, and based on the mass percentage in the refractory material, the obtained refractory material comprised 93.7% Al₂O₃ and 5.20% CaO.

The analysis was carried out according to the same method as in Example 1, and the bulk density obtained was 3.25 g/cm³.

### Example 11

(1) 195 g of tabular corundum granular material, 105 g of CM2A8 granular material, 70 g of active α-Al₂O₃ powder, 280 g of CM2A8 fine powder, 100 g of tetragonal zirconia fine powder, and 250 g of fused zirconia fine powder were stirred evenly to obtain a mixed material, and the maximum particle size of the granular material is 5 mm;
(2) the mixed material was molded at normal temperature, and then put into a mold of a high-temperature device for hot-pressed sintering. The pressure was applied while the temperature was raised. When the maximum temperature was raised to 1550°C and the maximum hot-pressed strength was 30 MPa, a corrosion-resistant refractory material was prepared.

The analysis was carried out according to the same method as in Example 1, and the phases obtained were mainly corundum, CM2A8, and zirconia. Based on the mass percentage of the phase of the refractory material, the total content of corundum, CM2A8, and zirconia was 99.6%, the corundum phase was 26.5%, the CM2A8 phase was 38.1%, and the zirconia phase was 35%.

The analysis was carried out according to the same method as in Example 1, and based on the mass percentage in the refractory material, the obtained refractory material comprised 59.5% Al₂O₃, 3.01% MgO, 2.03% CaO, and 35% ZrO₂.

The analysis was carried out according to the same method as in Example 1, and the bulk density obtained was 3.45 g/cm³.

### Example 12

(1) 350 g of sub white corundum granular material, 300 g of sintered corundum granular material, 175 g of monoclinic zirconia fine powder, 52.5 g of CM2A8 fine powder, and 188 g of aluminum hydroxide powder were stirred evenly to obtain a mixed material, and the maximum particle size of the granular material is 3 mm;
(2) the mixed material was put into a mold of a high-temperature furnace device for hot-pressed sintering. When the temperature was raised to 1350°C, the pressure was applied, and the pressure was increased while increasing the temperature. When the maximum temperature was raised to 1600°C, and the maximum hot-pressed strength was 15 MPa, a corrosion-resistant refractory material was prepared.

The analysis was carried out according to the same method as in Example 1, and the phases obtained were mainly corundum, CM2A8, and zirconia. Based on the mass percentage of the phase of the refractory material, the total content of corundum, CA6, and zirconia was 97.15%, the corundum phase was 75.4%, the CM2A8 phase was 5.25%, and the zirconia phase was 16.5%.

The analysis was carried out according to the same method as in Example 1, and based on the mass percentage in the refractory material, the obtained refractory material comprised 80.8% Al₂O₃, 0.30% CaO, 0.43% MgO, and 16.9% ZrO₂.

The analysis was carried out according to the same method as in Example 1, and the bulk density obtained was 3.26 g/cm³.

### Example 13

(1) 195 g of sintered corundum granular material, 105 g of CA6 granular material, 100 g of industrial alumina fine powder, 138.5 g of ρ-Al₂O₃ powder, 460 g of CA6 fine powder, and 11.5 g of calcium hydroxide powder were stirred evenly to obtain a mixed material, and the maximum particle size of the granular material is 8 mm;
(2) the mixed material was molded at normal temperature, drying, treating at 1500°C, and then putting into a mold of a high-temperature furnace for hot-pressed sintering. When the maximum temperature was raised to 1700°C, and the maximum hot-pressed strength was 21 MPa, a corrosion-resistant refractory material was prepared.

The analysis was carried out according to the same method as in Example 1, and the phases obtained were mainly corundum and CA6. Based on the mass percentage of the phase of the refractory material, the total content of corundum and CA6 was 97.7%, the corundum phase was 31.2% and the CA6 was 66.5%.

The analysis was carried out according to the same method as in Example 1, and based on the mass percentage in the refractory material, the obtained refractory material comprised 93.1% Al₂O₃ and 5.58% CaO.

The analysis was carried out according to the same method as in Example 1, and the bulk density obtained was 3.25 g/cm³

### Example 14

(1) 300 g of sintered corundum granular material, 460 g of industrial alumina fine powder, 140 g of CA6 fine powder, 11.5 g of calcium hydroxide powder, and 93 g of γ-Al₂O₃ powder were stirred evenly to obtain a mixed material, and the maximum particle size of the granular material is 5 mm;
(2) the mixed material was put into a mold of a high-temperature device for hot-pressed sintering. When the maximum temperature was raised to 1650°C and the maximum hot-pressed strength was 8 MPa, a corrosion-resistant refractory material was prepared.

The analysis was carried out according to the same method as in Example 1, and the phases were mainly corundum and CA6. Based on the mass percentage of the phase of the refractory material, the total content of corundum and CA6 was 95.4%, the corundum phase was 75.1% and the CA6 phase was 20.3%.

The analysis was carried out according to the same method as in Example 1, and based on the mass percentage in the refractory material, the obtained refractory material comprised 96.1% Al₂O₃ and 1.94% CaO.

The analysis was carried out according to the same method as in Example 1, and the bulk density obtained was 2.90 g/cm³.

### Example 15

(1) 260 g of sintered corundum granular material, 140 g of CM2A8 granular material, 40 g of industrial alumina fine powder, 83 g of ρ-Al₂O₃ powder, and 480 g of CM2A8 fine powder were stirred evenly to obtain a mixed material, and the maximum particle size of the granular material is 10 mm;
(2) the mixed material was put into a mold of a high-temperature device for hot-pressed sintering. When the maximum temperature was raised to 1650°C and the maximum hot-pressed strength was 4 MPa, a corrosion-resistant refractory material was prepared.

The analysis was carried out according to the same method as in Example 1, and the phases obtained were mainly corundum and CM2A8. Based on the mass percentage of the phase of the refractory material, the total content of corundum and CM2A8 was 98.8%, the corundum phase was 36.8% and the CM2A8 was 62%.

The analysis was carried out according to the same method as in Example 1, and based on the mass percentage in the refractory material, the obtained refractory material comprised 90.1% Al₂O₃, 5.20% MgO, and 3.60% CaO.

The analysis was carried out according to the same method as in Example 1, and the bulk density obtained was 2.90 g/cm³.

### Example 16

(1) 195 g of sintered corundum granular material, 105 g of CM2A8 granular material, 100 g of industrial alumina fine powder, 40 g ρ Al₂O₃ fine powder, and 560 g of CM2A8 fine powder were stirred evenly to obtain a mixed material, and the maximum particle size of the granular material is 1mm;
(2) the mixed material was put into a mold of a high-temperature device for direct hot-pressed sintering. When the maximum temperature was 1800°C and the hot-pressed strength was 2 MPa, a corrosion-resistant refractory material was prepared.

The analysis was carried out according to the same method as in Example 1, and the phases obtained were mainly corundum and CM2A8. Based on the mass percentage of the phase of the refractory material, the total content of corundum and CM2A8 was 98.3%, the corundum phase was 31.8% and the CM2A8 phase was 66.5%.

The analysis was carried out according to the same method as in Example 1, and based on the mass percentage in the refractory material, the obtained refractory material comprised 89.3% Al₂O₃, 5.58% MgO, and 3.88% CaO.

The analysis was carried out according to the same method as in Example 1, and the bulk density obtained was 3.65 g/cm³.

### Example 17

(1) 300 g of sintered corundum granular material, 585 g of industrial alumina fine powder, 40 g of ρ-Al₂O₃ powder, 45 g of calcium hydroxide fine powder, and 48 g of fused magnesia powder were stirred evenly to obtain a mixed material, and the maximum particle size of the granular material is 1mm;
(2) the mixed material is molded at normal temperature and dried, treated at 1450°C, and then put into a mold of a high-temperature device for hot-pressed sintering. When the maximum temperature was 1720°C, and the hot-pressed strength was 3 MPa, a corrosion-resistant refractory material was prepared.

The analysis was carried out according to the same method as in Example 1, and the phases obtained were mainly corundum, CM2A8, and CA6. Based on the mass percentage of the phase of the refractory material, the total content of corundum and CM2A8 was 90.0%, the corundum phase was 44.0%, the CM2A8 phase was 22.6%, and the CA6 phase was 23.4%.

The analysis was carried out according to the same method as in Example 1, and based on the mass percentage in the refractory material, the obtained refractory material comprised 90.8% Al₂O₃, 4.28% MgO, and 3.13% CaO.

The analysis was carried out according to the same method as in Example 1, and the bulk density obtained was 2.93 g/cm³.

### Example 18

(1) 650 g of white corundum granular material, 105 g of CA6 fine powder, and 250 g of white corundum powder were stirred evenly to obtain a mixed material, and the maximum particle size of the granular material is 5 mm;
(2) the mixed material was put into a mold of a high-temperature device for hot-pressed sintering, and the pressure was increased while increasing the temperature. When the maximum temperature was raised to 1715°C and the maximum hot-pressed strength was 7.5 MPa, a corrosion-resistant refractory material was prepared.

The analysis was carried out according to the same method as in Example 1, and the phases obtained were mainly corundum and CA6. Based on the mass percentage of the phase of the refractory material, the total content of corundum and CA6 was 99.53%, the corundum phase was 89.50% and the CA6 phase was 10.3%.

The analysis was carried out according to the same method as in Example 1, and based on the mass percentage in the refractory material, the obtained refractory material comprised 98.99% Al₂O₃ and 0.84% CaO.

The analysis was carried out according to the same method as in Example 1, and the bulk density obtained was 3.25 g/cm³.

### Comparative Example 1

The difference between Comparative Example 1 and Example 1 was that Comparative Example 1 used a conventional preparation method, that is, the method of Example 1 in China patent application CN107500747A was used to obtain a refractory material.

The analysis was carried out according to the same method as in Example 1, and the chemical composition of the obtained refractory material comprised Al₂O₃ 92.11% and CaO 7.02%, based on the mass percentage in the refractory material.

The analysis was carried out according to the same method as in Example 1, and the phases in Comparative Example 1 were mainly CA6, corundum, CaO·Al₂O₃, and CaO·2Al₂O₃. Based on the mass percentage of the phases in the refractory material, the CA6 phase was 69.1%, the corundum phase was 24.2%, the CaO·Al₂O₃ phase was 2.30%, and the CaO·2Al₂O₃ phase was 2.31%.

The analysis was carried out according to the same method as in Example 1, and the bulk density of the refractory material in Comparative Example 1 was 3.05 g/cm³.

**Table 2 Table of Raw Materials Used in Examples and Comparative Examples and the Refractory Materials Obtained**

| | The ratio of granular material to fine powder | Phase composition and content (%) | Chemical composition and content (%) | Bulk density (g/cm) |
|---|---|---|---|---|
| Example 1 | 60:40 | CM2A8: 6.0 | 78.17% Al₂O₃ | 3.30 |
| | | corundum: 73,1 | 0.35% CaO | |
| | | | 0.43% MgO | |
| | | zirconia: 20.0 | 20.0% ZrO₂ | |
| Example 2 | 50:50 | CA6: 23.4 | 87.12% Al₂O₃ | 3.12 |
| | | corundum: 65.1 | 1.93% CaO | |
| | | zirconia:9.68 | 9.65% ZrO₂ | |
| Example 3 | 40:60 | corundum: 32.0 | 64.57% Al₂O₃ | 3.30 |
| | | | 2.01% CaO | |
| | | CM2A8: 36.5 | 2.94% MgO | |
| | | zirconia: 30.0 | 30% ZrO₂ | |
| Example 4 | 60:40 | CA6: 10.6 | 98.99% Al₂O₃ | 2.95 |
| | | corundum: 88.0 | 0.89% CaO | |
| Example 5 | 50:50 | CA6: 22.4 | 96.6% Al₂O₃ | 3.12 |
| | | corundum: 74.5 | 1.95% CaO | |
| Example 6 | 65:35 | corundum: 88 | 98.99% Al₂O₃ | 3.28 |
| | | CA6: 10.1 | 0.75% CaO | |
| Example 7 | 50:50 | C2M2A14: 21.2 | 96.3% Al₂O₃ | 3.12 |
| | | corundum: 75.0 | 1.20% CaO | |
| | | | 1.0% MgO | |
| Example 8 | 30:70 | CA6: 22.4 | 96.4% Al₂O₃ | 3.12 |
| | | corundum: 74.7 | 1.91% CaO | |
| Example 9 | 50:50 | corundum: 73.1 | 95.7% Al₂O_{3;} | 3.12 |
| | | | 1.02% CaO | |
| | | CM2A8: 22.32 | 1.97% MgO | |
| Example 10 | 40:60 | CA6: 62.0 | 93.7% Al₂O_{3;} | 3.25 |
| | | corundum: 36.8 | 5.20% CaO | |
| Example 11 | 30:70 | Corundum: 26.5 | 59.5% Al₂O_{3;} | 3.45 |
| | | | 3.01% MgO | |
| | | CM2A8: 38.1 | 2.03% CaO | |
| | | zirconia: 35 | 35% ZrO₂ | |
| Example 12 | 65:35 | CM2A8: 5.25 | 80.8%Al₂O₃ | 3.26 |
| | | corundum: 75.4 | 0.43% MgO | |
| | | zirconia: 16.5 | 0.30% CaO | |
| | | | 16.9% ZrO₂ | |
| Example 13 | 30:70 | corundum: 31.2 | 93.1% Al₂O₃ | 3.25 |
| | | CA6: 66.5 | 5.58% CaO | |
| Example 14 | 30:70 | corundum: 75.1 | 96.1% Al₂O_{3;} | 2.90 |
| | | CA6: 20.3 | 1.94% CaO | |
| Example 15 | 40:60 | | 90.1%Al₂O₃ | 2.90 |
| | | corundum: 36.8 | 3.60% CaO | |
| | | CM2A8: 62.0 | 5.20% MgO | |
| Example 16 | 30:70 | corundum: 31.8 | 89.3% Al₂O₃ | 3.65 |
| | | CM2A8: 66.5 | 3.88% CaO | |
| | | | 5.58% MgO | |
| Example 17 | 30:70 | corundum: 44.0 | 90.8%Al₂O₃ | 2.93 |
| | | CM2A8: 22.6 | 3.13% CaO | |
| | | CA6: 23.4 | 4.28% MgO | |
| Example 18 | 65:35 | corundum: 89.50 | 98.99% Al₂O₃ | 3.25 |
| | | CA6: 10.3 | 0.84% CaO | |
| Comparative Example 1 | 65:35 | corundum: 24.2 | | 3.05 |
| | | CA6: 69.1 | 92.11% Al₂O₃ | |
| | | CaO·Al₂O₃: 2.3 | 7.02% CaO | |
| | | CaO·2Al₂O₃: 2.31 | | |

### Experiment Example 1: Dynamic Slag Erosion Experiment

The dynamic slag erosion experiment was conducted by comparing the refractory material obtained from Example 1 with the refractory material sample obtained from Comparative Example 1.

The sample for dynamic slag penetration requires a longer length to be fixed on the rotating axis. Given the high bulk density, high content of corundum phase, and high hardness of the refractory material obtained in Example 1, it is difficult to drill into a φ 15 mm cylindrical sample and only cut into square strips. As a measurement of erosion rate, the size of the opposite side shall prevail, so that cutting the sample into square strips does not affect the accuracy of the final result. As a comparison, the castable of Comparative Example 1 was poured into sample of the same size.

The dynamic slag erosion experiment has the following conditions: the deoxygenation method adopts metal aluminum deoxygenation, with an experimental temperature of 1600°C and a hydrogen atmosphere; the slag system adopts CaO-Al₂O₃-SiO₂ system, and the steel slag composition is 51% CaO, 30% Al₂O₃, 11% SiO₂, 8% MgO, and CaO/SiO₂ is 4.6.

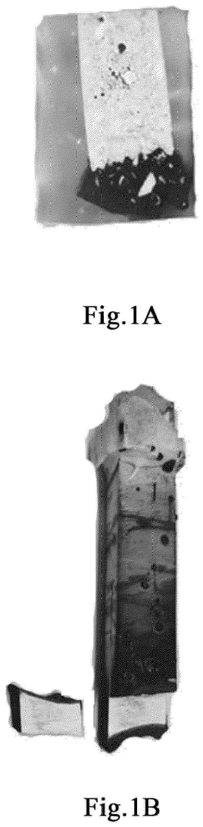

The castable of Comparative Example 1 and the refractory material described in Example 1 were respectively bonded to the above motor using high-temperature adhesive, and the rotation speed was controlled at 10 cycles/minute. The experimental results are shown in Fig. lA and Fig. 1B, respectively.

It can be seen from Fig. 1A and Fig. 1B that after rotating for 8 minutes, the castable sample of Comparative Example 1 immersed in steel slag has been collapsed. However, the refractory material in Example 1 has not changed much, and the roundness is still very obvious, basically without much change. The width of the unreacted interface was measured by using a vernier caliper after cutting open the sample, which showed that it was damaged by 0.2-0.5 mm, indicating that the corrosion resistance of the refractory material obtained from Example 1 is very excellent.

### Experiment Example 2: Static Slag Erosion Experiment

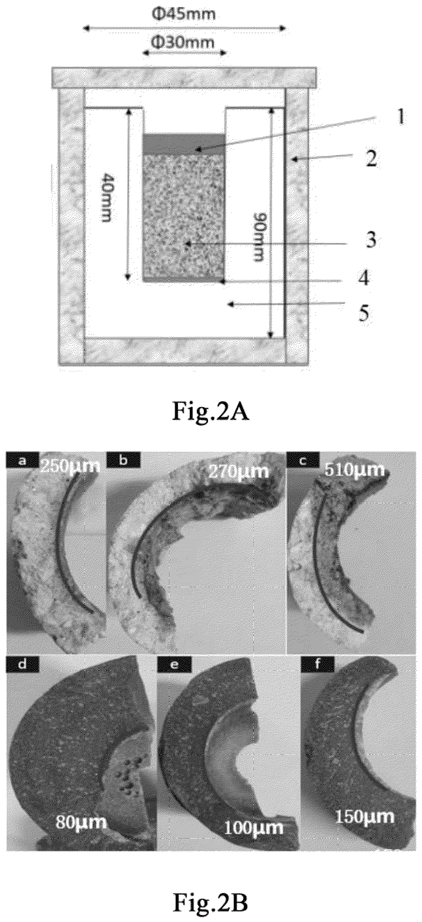

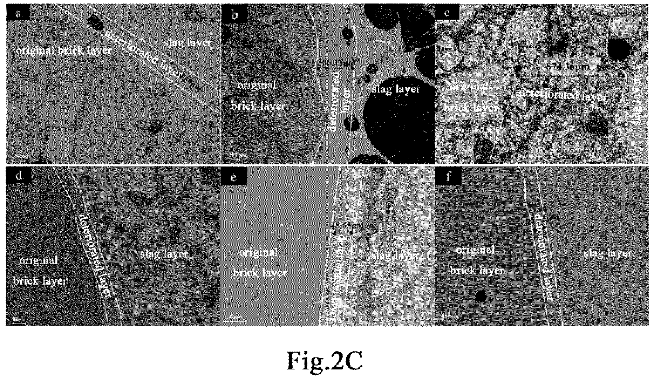

The static slag erosion experiment adopts the crucible method. Wherein Fig. 2A is a schematic diagram of the static crucible method for molten steel smelting.

The sample in Example 1 was first hot-pressed into a φ 45mm sample, and then drilled out a φ 30mm× 40mm pit. The castable of Comparative Example 1 was also poured into a φ 45mm sample, with an internal pit size of φ 30mm × 40mm_{∘} The experimental conditions are 1600°C, argon gas atmosphere, and deoxygenation using metal aluminum. The slag system adopts CaO-Al₂O₃-SiO₂ system, and the steel slag composition is 51% CaO, 30% Al₂O₃, 11% SiO₂, 8% MgO, and CaO/SiO₂ is 4.6. The static slag erosion results are shown in Fig. 2B, wherein a, b, and c represent the contour structures of the castable in Comparative Example 1 at 30 minutes, 40 minutes, and 50 minutes, respectively, and d, e, and f represent the contour structures of the sample in Example 1 at 30 minutes, 40 minutes, and 50 minutes, respectively.

From Fig. 2B, it can be seen that for the castable in Comparative Example 1, some parts have already been completely penetrated and eroded by slag at 40 minutes, and the sample has been collapsed. Although the erosion thickness of some part is shown to be 270 µm, the slag has fully penetrated, which is caused by the structure and performance of traditional refractory materials. Due to the uneven structure of traditional materials, they are often good as a whole, but some parts are unbearable. The sample in Example 1 of the present application exhibits excellent uniformity and a very complete structure.

In addition, Fig. 2C shows a comparison of the microstructure between the castable in Comparative Example 1 and the sample in Example 1 of this application, a. b and c represent the microstructure of castable in Comparative Example at 30 minutes, 40 minutes, and 50 minutes, respectively, and d. e and f represent the microstructure of the sample in Example 1 at 30 minutes, 40 minutes, and 50 minutes, respectively. From the microstructure, it can also be seen that the structure of the castable in Comparative Example 1 is very uneven, and the slag can penetrate deeply along the areas with more pores. However, the metamorphic layer in Example 1 of this application is very thin and uniform. This also demonstrates that the performance of the sample of the present application is excellent.

### Experiment Example 3: Experiment on Slag Erosion and Thermal Shock Stability

The experiments were conducted on slag erosion and thermal shock stability of the refractory material obtained from Examples 1-17 and Comparative Example 1. Wherein the measurements regarding slag erosion are as follows: firstly, the crucible after the experiment is cut along the middle surface, and samples are taken on the crucible wall for electron microscopy observation and measurement, in order to measure the slag erosion. In addition, the thermal shock stability experiment is determined in accordance with GB/T 30873-2014, and the results are shown in Table 3.

**Table 3 Experimental Data**

| | Slag erosion, µm/40min | Thermal shock stability, times |
|---|---|---|
| Example 1 | 100 µm | 10 |
| Example 2 | 130 µm | 16 |
| Example 3 | 124 µm | 14 |
| Example 4 | 155 µm | 12 |
| Example 5 | 142 µm | 13 |
| Example 6 | 134 µm | 12 |
| Example 7 | 147 µm | 10 |
| Example 8 | 160 µm | 11 |
| Example 9 | 158 µm | 10 |
| Example 10 | 154 µm | 13 |
| Example 11 | 133 µm | 10 |
| Example 12 | 117 µm | 8 |
| Example 13 | 165 µm | 12 |
| Example 14 | 170 µm | 17 |
| Example 15 | 183 µm | 16 |
| Example 16 | 138 µm | 5 |
| Example 17 | 210 µm | 15 |
| Example 18 | 128 µm | 12 |
| Comparative Example 1 | 7.5 mm | 15 |

The application and performance evaluation of refractory materials are not only related to their resistance to slag erosion, but also need to consider the thermal shock stability of refractory materials under temperature rapid cooling and rapid heating conditions. If the thermal shock stability is not good, cracks may appear during use, affecting the material's performance.

For erosion resistance, the addition of ZrO₂ is advantageous at the same bulk density. Compared with CA6, C2M2A8, and CM2A8, corundum has better erosion resistance. For the same composition, refractory materials with high bulk density have better erosion resistance.

The addition of ZrO₂ is advantageous for thermal shock stability. The addition of CA6 has better thermal shock stability than that of the refractory materials with the same quality of corundum, C2M2A8, and CM2A8. For the same composition, if the volume density is small, the thermal shock stability is relatively better.

In addition, it is also necessary to consider the cost-performance ratio of refractory materials. For example, refractory materials added with zirconia have good slag erosion resistance and thermal shock stability, and the performance is also excellent when the addition is in large amounts, but zirconia is relatively expensive. Therefore, for the embodiments of the present application, the performance advantages and disadvantages are the result of comprehensive comparison.

The above is only a preferred embodiment of the present application and is not intended to limit the present application in other forms. Any person familiar with this field may make use of the disclosed technical content to change or adapt it to embodiments with equivalent variations. However, any simple modifications, equivalent variations, or adaptations of the above embodiments based on the technical essence of the present application, without departing from the content of the technical solution of the present application, still fall within the scope of protection of the technical solution of the present application.

## Claims

1. A corrosion-resistant refractory material, wherein the phase of the refractory material comprises corundum and one or two or more selected from the group consisting of: CA6, C2M2A14, CM2A8 and ZrO₂.

2. The refractory material according to claim 1, wherein based on the mass percentage of the phase of the refractory material, the total phase content of the corundum and one or two or more selected from CA6, C2M2A14, CM2A8 and ZrO₂ is >_ 90%;
preferably the phase content of corundum is 26.5-89.5%, preferably 32-89.5%, more preferably 32.0-88.0%;
the total phase content of CA6+C2M2A14+CM2A8 is 5.25-66.5%, preferably 5.25-62.0%, more preferably 6.0-62.0%; and
the phase content of ZrO₂ is 0-35%, preferably 0-30%.

3. The refractory material according to claim 1 or 2, wherein based on the mass percentage in the refractory material, the content of sintering-promoting impurity components is ≤1.5%, preferably ≤1.0%.

4. The refractory material according to any one of claims 1-3, wherein the chemical composition of the refractory material comprises Al₂O₃, CaO, MgO and ZrO₂, based on the mass percentage in the refractory material, the Al₂O₃ is 59.5-98.99%, preferably 64.57-98.99%; the CaO is 0.30-5.58%, preferably 0.35-5.58%, more preferably 0.30-5.20% or 0.35-5.20%; the MgO is 0-5.58%; and the ZrO₂ is 0-35%.

5. The refractory material according to any one of claims 1-4, wherein the bulk density of the refractory material is 2.90-3.65 g/cm³, preferably 2.95-3.45 g/cm³, more preferably 2.95-3.30 g/cm³.

6. The refractory material according to any one of claims 1-5, wherein the refractory material is prepared by a method comprising the following steps:
mixing a granular material and a fine powder to obtain a mixed material, then subjecting the mixed material to hot-pressed sintering to obtain the refractory material.

7. The refractory material according to claim 6, wherein the mass ratio of the granular material to the fine powder is 30-65:35-70.

8. The refractory material according to claim 6 or 7, wherein the granular material comprises corundum granular material and a mixed granular material, preferably based on the mass percentage in the granular material, the corundum granular material is 65-100%, and the mixed granular material is 0-35%;
preferably the mixed granular material is one or two or more selected from the group consisting of: CA6 granular material, C2M2A14 granular material, and CM2A8 granular material;
preferably the corundum granular material is one or two or more selected from the group consisting of: tabular corundum granular material, sintered corundum granular material, white corundum granular material, dense corundum granular material, and sub-white corundum granular material.

9. The refractory material according to any one of claims 6-8, wherein the fine powder comprises Al₂O₃-CaO-MgO system fine powder and ZrO₂-containing fine powder, preferably based on the mass percentage in the fine powder, the Al₂O₃-CaO-MgO system fine powder is 50-100%, and the ZrO₂-containing fine powder is 0-50%;
preferably the Al₂O₃-CaO-MgO system fine powder comprises Al₂O₃-containing fine powder and one or two or more fine powders selected from CA6 fine powder, C2M2A14 fine powder, CM2A8 fine powder and MgO-CaO system fine powder;
preferably the MgO-CaO system fine powder is MgO-containing fine powder and/or CaO-containing fine powder;
preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sintered corundum fine powder, and tabular corundum fine powder;
preferably the MgO-containing fine powder is one or two or more selected from the group consisting of: magnesium carbonate fine powder, light-calcined magnesia fine powder, brucite fine powder, magnesium hydroxide fine powder, magnesium chloride fine powder, high-purity magnesia fine powder, and fused magnesia fine powder;
preferably the CaO-containing fine powder is one or two or more selected from the group consisting of: quicklime fine powder, limestone fine powder, calcium hydroxide fine powder, CaO·Al₂O₃ fine powder, CaO·2Al₂O₃ fine powder, 12CaO·7Al₂O₃ fine powder, CA6 fine powder, C2M2A14 fine powder and CM2A8 fine powder;
preferably the ZrO₂-containing fine powder is one or two or more selected from the group consisting of: monoclinic zirconia fine powder, tetragonal zirconia fine powder, desiliconized zirconium fine powder, and fused zirconia fine powder.

10. The refractory material according to any one of claims 6-9, wherein the particle size of the fine powder is ≤0.088mm; preferably the particle size of the granular material is 0.088-10mm, more preferably 0.088-8mm.

11. The refractory material according to any one of claims 6-10, wherein the hot-pressed sintering is performed by
putting the mixed material into a mold of a high temperature device for hot-pressed sintering; or
molding the mixed material at normal temperature, and then putting it into a mold of a high temperature device for hot-pressed sintering; or
molding the mixed material at normal temperature, and presintering it at low temperature, and then putting it into a mold of a high temperature device for hot-pressed sintering.

12. The refractory material according to claim 11, wherein the temperature of the hot-pressed sintering is 1550-1800°C; preferably the strength of the hot-pressed sintering is 0.5-30 MPa.

13. A preparation method for refractory material, comprising the following steps:
mixing a granular material and a fine powder to obtain a mixed material, then subjecting the mixed material to hot-pressed sintering to obtain the refractory material.

14. The preparation method according to claim 13, wherein the mass ratio of the granular material to the fine powder is 30-65:35-70.

15. The preparation method according to claim 13 or 14, wherein the granular material comprises corundum granular material and a mixed granular material, preferably based on the mass percentage in the granular material, the corundum granular material is 65-100%, and the mixed granular material is 0-35%;
preferably the mixed granular material is one or two or more selected from the group consisting of: CA6 granular material, C2M2A14 granular material, and CM2A8 granular material;
preferably the corundum granular material is one or two or more selected from the group consisting of: tabular corundum granular material, sintered corundum granular material, white corundum granular material, dense corundum granular material, and sub-white corundum granular material.

16. The preparation method according to any one of claims 13-15, wherein the fine powder comprises Al₂O₃-CaO-MgO system fine powder and ZrO₂-containing fine powder, preferably based on the mass percentage in the fine powder, the Al₂O₃-CaO-MgO system fine powder is 50-100%, and the ZrO₂-containing fine powder is 0-50%;
preferably the Al₂O₃-CaO-MgO system fine powder comprises Al₂O₃-containing fine powder and one or more fine powders selected from CA6 fine powder, C2M2A14 fine powder, CM2A8 fine powder and MgO-CaO system fine powder;
preferably the MgO-CaO system fine powder is MgO-containing fine powder and/or CaO-containing fine powder;
preferably the Al₂O₃-containing fine powder is one or two or more selected from the group consisting of: active α-Al₂O₃ fine powder, γ-Al₂O₃ fine powder, ρ-Al₂O₃ fine powder, aluminum hydroxide fine powder, industrial alumina fine powder, white corundum fine powder, sintered corundum fine powder, and tabular corundum fine powder;
preferably the MgO-containing fine powder is one or two or more selected from the group consisting of: magnesium carbonate fine powder, light-calcined magnesia fine powder, brucite fine powder, magnesium hydroxide fine powder, magnesium chloride fine powder, high-purity magnesia fine powder, and fused magnesia fine powder;
preferably the CaO-containing fine powder is one or two or more selected from the group consisting of: quicklime fine powder, limestone fine powder, calcium hydroxide fine powder, CaO·Al₂O₃ fine powder, CaO·2Al₂O₃ fine powder, 12CaO·7Al₂O₃ fine powder, CA6 fine powder, C2M2A14 fine powder and CM2A8 fine powder;
preferably the ZrO₂-containing fine powder is one or two or more selected from the group consisting of: monoclinic zirconia fine powder, tetragonal zirconia fine powder, desiliconized zirconium fine powder, and fused zirconia fine powder.

17. The preparation method according to any one of claims 13-16, wherein the particle size of the fine powder is ≤0.088mm; preferably the particle size of the granular material is 0.088-10mm, preferably 0.088-8mm.

18. The preparation method according to any one of claims 13-17, wherein the hot-pressed sintering is performed by
putting the mixed material into a mold of a high temperature device for hot-pressed sintering; or
molding the mixed material at normal temperature, and then putting it into a mold of a high temperature device for hot-pressed sintering; or
molding the mixed material at normal temperature, and presintering it at low temperature, and then putting it into a mold of a high temperature device for hot-pressed sintering.

19. The preparation method according to claim 18, wherein the temperature of the hot-pressed sintering is 1550-1800°C; preferably the strength of the hot-pressed sintering is 0.5-30 MPa.

20. A working lining of a ladle for molten steel smelting, wherein it comprises the refractory material according to any one of claims 1-12, or the refractory material prepared by the preparation method according to any one of claims 13-19.

21. A working lining for molten aluminum smelting and transporting ladles, wherein it comprises the refractory material according to any one of claims 1-12, or the refractory material prepared by the preparation method according to any one of claims 13-19.

22. A refractory lining for industrial furnaces, wherein it comprises the refractory material according to any one of claims 1-12, or the refractory material prepared by the preparation method according to any one of claims 13-19.
